# EUROPEAN PATENT SPECIFICATION

(11) **EP 3 129 447 B1**
(45) Date of publication and mention of the grant of the patent: **10.04.2019**
(21) Application number: 14729489.6
(22) Date of filing: 11.04.2014
(51) Int. Cl.: C10G 32/02, B01J 19/08, F02B 51/04, F02M 27/04

(54) **DEVICE AND METHOD FOR TREATING HYDROGEN AND HYDROCARBON LIQUID AND GAS SUBSTANCES MORE EFFICIENTLY DUE TO MAGNETICAL IMPACT**
EFFIZIENTE VORRICHTUNG UND VERFAHREN ZUR BEHANDLUNG VON WASSERSTOFF, FLÜSSIGEN UND GASSFÖRMIGEN KOHLENWASSERSTOFFEN NACH EINEM MAGNETISCHEN AUFPRALL
SYSTÈME DE TRAITEMENT D'HYDROGÈNE, D'HYDROCARBURES LIQUIDES ET GAZEUX PLUS EFFICACEMENT DU A UN IMPACT MAGNETIQUE

(30) Priority: 09.04.2014 TR 201404119
(43) Date of publication of application: 15.02.2017
(73) Proprietor: ERYILMAZ, Cengiz, 07040 Muratpasa Antalya (TR)
(72) Inventor: ERYILMAZ, Cengiz, 07040 Muratpasa Antalya (TR)
(74) Representative: Lösch, Christoph Ludwig Klaus
(86) International application number: PCT/TR2014/000118
(87) International publication number: WO 2015/156745

(56) References cited:
- EP-A2- 2 650 525
- US-A- 5 271 834
- US-A1- 2003 116 494
- US-A1- 2007 209 643

## Description

### 1. TECHNICAL FIELD

This present invention relates to an improved method and a new generation simplified device for treatment of hydrogen and hydrocarbon consisting liquid and gas substances as water to remove contaminants thereof and more particularly liquid and gaseous hydrocarbon fuels, such as gasoline, gasohol, diesel fuel, kerosene, propane, natural gas, oil like to enhance the combustion efficiency.

### 2. DESCRIPTION OF THE PRIOR ART

With the energy shortage reaching worldwide proportions, especially with respect to petroleum-based fuels, the need to burn such fuels efficiently has never been of greater importance. Since the automobile is perhaps the largest consumer of petroleum today, significant conservation of gasoline and diesel fuel could be realized if the combustion process were more efficient, thereby enabling greater distances to be driven on a given quantity of fuel. Furthermore, air pollution has increased drastically in recent years due to the expanded use of automobiles and trucks, and there are very significant pressures being placed on industry by governments to produce vehicle engines which emit very low levels of pollutants.

Fuel and gas efficiency and pollution reduction are important, not only in connection with vehicles, but also with heating and electricity generation plants which burn hydrocarbon fuels, such as oil, natural gas, and propane.

Most fuels for internal combustion engine are liquid and gas, fuels do not combust until they are vaporized and mixed with air. Most emission motor vehicle consists of unburned hydrocarbons, carbon monoxide and oxides of nitrogen. Unburned hydrocarbon and oxides of nitrogen react in the atmosphere and create smog. Smog is prime cause of eye and throat irritation, noxious smell, plat damage and decreased visibility. Oxides of nitrogen are also toxic.

Although there has been considerable effort to reduce air pollutants from engines, furnaces, electricity generating installations, and the like, the primary emphasis has been on treatment of the exhaust and stack emissions rather than on devising techniques to burn the fuel and gases more efficiently thereby inherently resulting in the emission of fewer waste products. A beneficial result of more efficient combustion is that the fuel is burned more completely so that fewer hydrocarbon waste products are emitted in the exhaust gases.

Of course, the use of internal combustion engines is not restricted to the automotive field. Diesel engines, for example, power many of the world's trains. Turbine engines power a majority of the world's commercial air planes and a good many of the world' electric power generating stations.

Although the exact chemical and nuclear mechanisms through which magnetic treatments produce changes in fluids are not completely understood, the changes effected by known magnetic conditioning devices for treating fluids are measurable and reproducible. There is also some theoretical basis for the effectiveness of magnetic devices in ionizing fluids, such as the electron theory propounded by J. D. van der Waals. According to this theory, the interlocking forces between electrons and the nuclei of compounds containing hydrogen may be influenced by magnetic fields.

Fluid conditioning devices have been suggested in the past for providing an increase in fuel economy through the use of magnets or catalysts, and some of these appear to have shown modest improvements in the performance of fossil fuel combustion devices. However, these devices involve numerous parts, are bulky in size and high in cost, and have seldom shown marked improvements in the economic performance of combustion devices. Consequently, there is a dire need for a simple, no moving parts fuel economizer capable of dramatically improving the burning efficiency of fossil fuels and significantly reducing the pollution emissions from such combustion, while doing so with reliability and low cost over the life of the combustion device.

There have been numerous magnetic devices proposed for the treatment of fuel to promote more efficient combustion, better efficiency and reduced emissions. For example, such devices are disclosed in U.S. Pat. No. 3,830,621 to Miller; U.S. Pat. No. 4,188,296 to Fujita; U.S. Pat. No. 4,569,737 to Sakata; and U.S. Pat No. 4,716,024 to Pera. Other devices for magnetic treatment of fuels are disclosed in the published Japanese patent applications No. 57/122216 of Akai; No: 58/71993 of Hori; and No. 58/225189 of Katayama. Similar magnetic devices are disclosed in U.S. Pat. No.4,265,746 TO 4,265,747 Zimmerman, et al.; U.S. Pat. No. 4,265,754 to Menold; and U.S. Pat. No. 4,265,755 to Zimmerman, but are for treatment of water.

One such magnetic treatment device is disclosed in U.S. Letters Patent Nos. 3,951,807, 4,050,426 and 4,153,559. Basically, such device comprises an elongated magnet having a multiplicity of longitudinally spaced poles encased in a non-magnetic jacket and concentrically positioned within a galvanized or black iron casing mode of a magnetic material, such as iron. The jacketed magnet may be centered by means of a pair of stepped collars secured thereto which, in turn, are centered by means of a pair of layered inserts. Alternatively, the jacketed magnet may be centered by means of resilient, tapered sleeves, which are wedged between the jacket for the magnet and the galvanized casing.

Magnetic treatment devices generally of this type are well known and prevent corrosion and the buildup of scale by causing the calcium and other minerals present in hard water to form, instead, a loose slurry which can be removed easily from the system by blow down or flushing. In many applications, such as furnace humidifiers, for example, it is important for the device to be contained within a fairly small housing, and for this reason, available space is at a premium. Furthermore, the effectiveness with which the water is treated depends on the intensity of the magnetic field within the treatment chamber and the effective length of the chamber itself. Accordingly, it is desirable that the chamber be free of any obstructions which may occupy otherwise available treatment space, and for the water to be directed into and completely occupy the treatment chamber as quickly and in as short a distance as possible after it enters the device.

Pat. No: F02M27/04 This invention is related with the engine mechanics, in particular to means of processing the fuel prior to combustion, for example, in internal combustion engines, boilers and furnaces in the other power plants in order to ensure the best conditions of combustion.

It is known that exposure to certain physical factors, such as electrostatic, electromagnetic or permanent magnetic field, promotes better combustion efficiency of the engine and reduce exhaust emissions.Thus, in the patent [Patent RU N 2146015, F02M27/04, 1998] for fan-fuel mixture effects the spatial gradient of the inhomogeneous magnetic field produced by magnetization of the permanent magnets fanned by blending them uneven magnetizing winding, which on the central portion of each magnet is wound in 1.5-2.2 times more turns than a peripheral, connect the windings in series and pulse magnetized.

To ensure a more active influence on the mixture when the engine is idling magnetic field focus so that in the primary chamber receiving and distribution manifold it exceeds the highest field strength in each of the other not less than 1.2 times. Exercise this statistical selection of properties and parameters of the magnets.

The disadvantage of this method is its complexity and low reliability.

Known method of modifying the fuel and lubricants, including effects on fuels and lubricants alternating magnetic field, the frequency of which increases continuously from the beginning to the end of treatment (patent RU N 2121595, F02N 27/04, 1997).

The disadvantage of this method is the complexity of manufacturing and installation of the device on the fuel line.

The closest known method is a method of treating liquid and gaseous hydrocarbon fuels magnetic field [Patent RU N 2408792 , F02M27/04, 2009] , consists in the fact that the fuel is set at least two groups of permanent Nd-Fe-B magnets - magnetic systems and successively facing the fuel via the fuel pipe , wherein the magnet system is mounted on a distance of 100 to 3000 mm from each other , to further ensure the growth of hydrocarbon fuel economy after the second and subsequent group of magnets. Permanent magnets operate prismatic. The magnetic field in the system is controlled by the installation of additional pairs of magnets on top of the previously installed.

This method has low reproducibility of the magnetic field on fuel economy because of the spatial inhomogeneity of the magnetic field requires additional criteria of similarity in the transition from one size to the other fuel system.

A device for magnetic fuel treatment for gasoline engine, comprising: a body of non-magnetic material, the flow channels, permanent magnets and magnetic [Patent RU N 2168052, F02M27/04, F02B51/042, 1998]. The housing is formed as a plate yoke is formed as two C-shaped brackets to the ends of the envelope housing plate.

Inserted in the housing with clearance relative to each other two pairs of permanent magnets are preferably of rectangular shape, each pair of magnets are disposed flow channels, the respective outlets of the carburetor diffuser. The diameter of the channels does not exceed the length of each of the magnets is fastened to the plate, and the plate thickness is approximately a tenth of its length.

The disadvantage of this device is the low efficiency effects of magnets on the incoming fuel into the combustion chambers.

Known magnetic activator fuel flow [Patent RU N 2324838 , F02M27/04, 2006] comprising the dielectric body , and permanent magnets , characterized in that the housing is formed as a dielectric cylinder which is inserted into the two annular permanent magnet with axial magnetization like magnetic poles towards to each other, a working gap there between equal to their aggregate thickness , wherein the activator is provided with two molded fittings , consisting of inner and outer hollow cylinders , the outer diameter of the outer cylinder is equal to the inner diameter of the nozzles of the fuel hose , The diameter of the inner part of the nozzles is equal to the diameter of the opening the cylindrical body activator which both ends are tightly inserted into the cylindrical housing and the exterior of the shell of the activator with an external thread is formed on both sides, and further provided with two clamping collar bushings with internal thread diameter equal to the outside diameter of the thread part of the body and with the central hole with a diameter equal to the outer portion of the fitting.

A disadvantage of the known device should include a weak and highly non-uniform magnetic field in the gap between the two annular permanent magnets due to the fact that they like magnetic poles are oriented towards each other.

As the closest prior art device is the magnetic activator of fuel [Patent RU N 2324838, F02M27/04, 2006], mounted on the fuel line and comprising a body having disposed therein a permanent Nd-Fe-B magnet. The activator is provided with at least two magnets mounted in series along the movement of fuel in the fuel line. Between the magnets mounted on at least one distance spacer regulator made of a nonmagnetic material. Magnets may be formed as a ring or half-rings. At least one annular magnet is mounted in the apparatus body is inclined to the longitudinal axis of the housing at an angle of 10 to 90 degrees. Magnets may be formed as plates or disks, and are mounted in the housing in a staggered manner on opposite sides of the longitudinal axis of the housing.

A disadvantage of the known device is a low reproducibility of the geometry of the magnetic field acting on the fuel, changing the size of the device due to magnetic field inhomogeneity due to the fact that the magnets are mounted in the housing in a staggered manner on opposite sides of the longitudinal axis of the housing and, moreover, some of the magnets are arranged obliquely to the longitudinal axis of the housing at an angle of 10 to 90 degrees.

The device patented by Shalhoob contains a concentric arrangement of magnetic fields that increases the flow velocity of the water at the poles of the permanent magnets by reducing the cross section of the water flow thusly accelerating the fluid flow at the magnetic poles. A ferrous rod and washers are included to concentrate the magnetic flux at the poles. Although several of the references cited show knowledge of the importance of obtaining maximum fluid exposure to a high flux density, none touch the importance of the spacial distribution of repeated exposures to highly concentrated fields. It has been found herein that performance can be improved by changing the repetitive alternating field exposure time and spacial cutting rate as a function of fluid velocity.

US 2003/0116494 A1 describes a magnetic fluid filter for filtering metallic particles from a fluid flow system. The filter comprises a mangetic array, a central support for the magnetic array, and arm pieces for positioning the effecitve range of the mangnetic array in a fluid flow environment. The magnetic array includes a plurality of disc shaped mangets arranged with poles in opposition, interleaved with the arm pieces and disc shaped pole pieces.

US 2007/0209643 A1 discloses a compact inline magnetic fuel conditioner comprising the features of the preamble portion of claim 1.

While the devices disclosed in the above patents and published applications have varying degrees of effectiveness for their intended uses, the devices and system disclosed therein are unduly complex and costly to manufacture and use. There is a need for a device for magnetically treating fuels, which is simpler in construction and use and which is more effective.

Accordingly, one object of the present invention is to provide a new generation simplified device for significantly high-intensive, sufficient magnetically treating hydrogen and hydrocarbon consisting liquid and gas substances as water and more particularly liquid and gaseous hydrocarbon fuels, such as gasoline, gasohol, diesel fuel, kerosene, propane, natural gas, oil and the like in order to reach an improved efficiency, for their beneficiaries.

A further objective of this invention is improving a method for treatment of a hydrogen and hydrocarbon consisting liquid and gas substances as water and more particularly liquid and gaseous hydrocarbon fuels, such as gasoline, gasohol, diesel fuel, kerosene, propane, natural gas, oil and the like more efficient in order to enhance the service ability of them in applications.

### 3. SUMMARY OF THE INVENTION

The stated technical problems are solved by the present invention by providing a device comprising the features of claim 1 and a method of using the device comprising the features of claim 2.

Because of its relatively simple construction, the new generation device of the invention will be substantially maintenance free. The new generation device may be used to treat a variety of hydrogen and hydrocarbon consisting liquid and gas substances as water and more particularly liquid and gaseous hydrocarbon fuels, such as gasoline, gasohol, diesel fuel, kerosene, propane, natural gas, oil and the like.

It is believed that, in general terms, the improved performance provided by using the invention with current combustion systems will result in major environmental improvements by significantly reducing pollutants in combustion exhaust. By reason of the reduction achieved, it may be possible to completely eliminate conventional catalytic converters from future motor vehicles, which would represent a substantial economic savings. It is also believed that use of the apparatus will be beneficial to the efficiency in all types of combustion systems using hydrogen and hydrocarbon consisting liquid and gas substances as water and more particularly liquid and gaseous hydrocarbon fuels, such as gasoline, gasohol, diesel fuel, kerosene, propane, natural gas, oil and the like for a variety of applications.

### 4. BRIEF DESCRIPTION OF THE DRAWINGS

The present invention is further illustrated and described with reference to the annexed drawing wherein
**FIG. 1, FIG. 2 and FIG. 7** are overall half cut and longitudinal sectional view of internal constituent parts of a new generation simplified device generally having a nonmagnetic cylindrical shaped brass filled outer complete body with parts removed for the purpose of clarity, showing the inner structure in accordance with the present invention therein;
**FIG.3, FIG. 4****,** **FIG. 5 and FIG.6** are an overall isometric views of a internal constituent parts of a new generation simplified device generally having a nonmagnetic cylindrical shaped brass filled outer complete body, in accordance with the present invention showing the inner structure therein;
**FIG. 8** is a perspective view and of the the structure and arrangement of the uniquely linear configured, as side-by-side spaced, longitudinally coextensive magnet assembly forming a linear cylindrical magnet body therein;
**FIG. 9** is a fragmentary sectional perspective top view of two different sides of the "N52 Grade Strong Neodymium Round Ring Countersunk Hole Rare Earth Magnets" and "Nonmagnetic PVC Circular Thin Ring Spacer, therein;
**FIG. 10** is a schematic rendition of the a coaxial annular magnetizing chamber in accordance with the present invention, therein;
**FIG. 11** is a longitudinal general view of the nonmagnetic cylindrical shaped brass filled outer body of the new generation device for treating hydrogen and hydrocarbon consisting liquid and gas substances as water and more particularly liquid and gaseous hydrocarbon fuels, such as gasoline, gasohol, diesel fuel, kerosene, propane, natural gas, oil and the like, thereof;

### 5. DETAILED DESCRIPTION OF THE INVENTION

In order to achieve the purpose of this invention, the present invention is described in details with reference to the annexed drawing wherein;

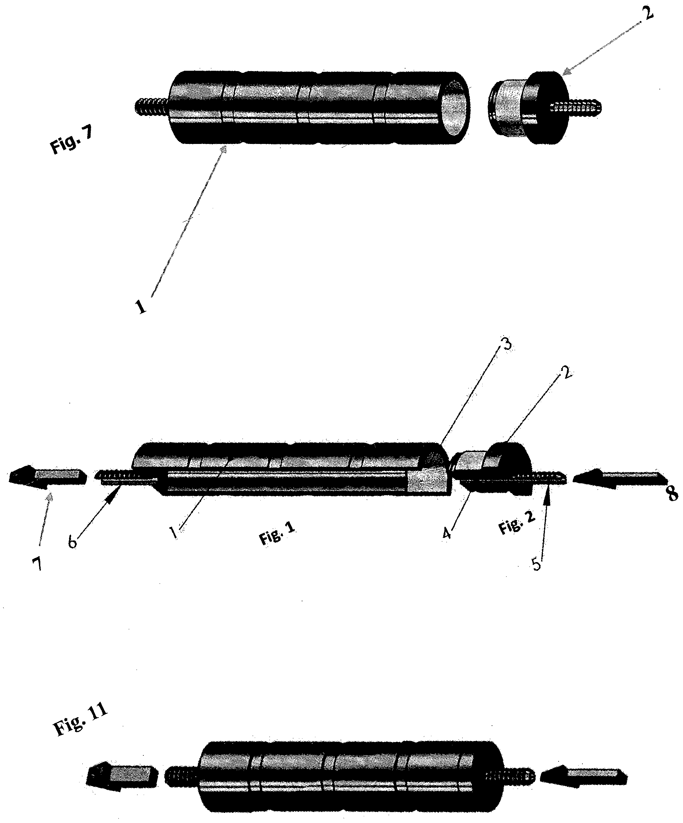

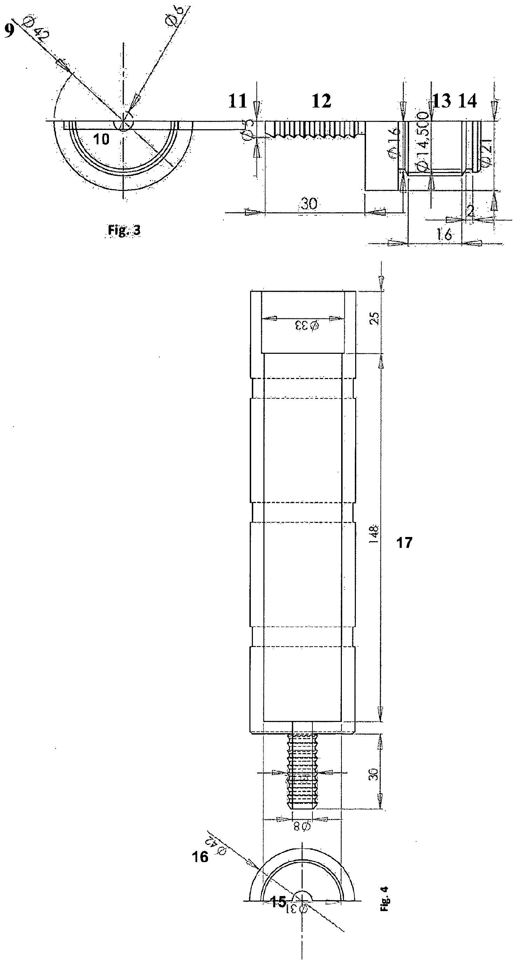

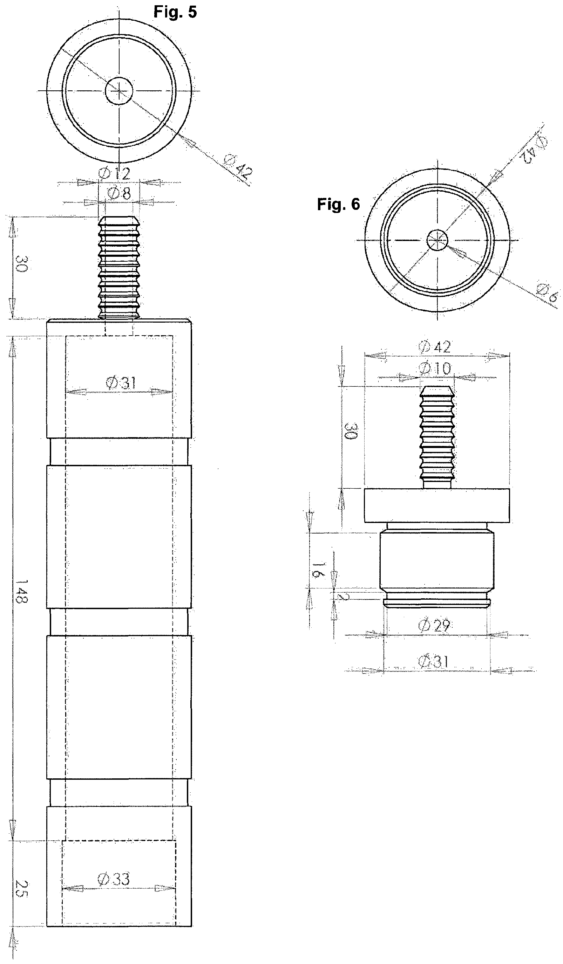

**FIG. 1**, **FIG.2 and FIG. 7** are overall half cut and longitudinal sectional view of internal constituent parts of a new generation simplified device generally having a nonmagnetic cylindrical shaped brass filled outer complete body which is totally consisted of 3 main parts whereas one of the main parts which is nonmagnetic cylindrical shaped brass filled outer half body has outer total length of (Fig.3, Fig.4, Fig.5, Fig.6) 183 mm (17) and outer ø 42 mm(9, 16), whereas formed from 3 different sized sections generally where the first section of the general main part forming the totally closed side of the nonmagnetic cylindrical shaped brass filled outer body(1) (Fig. 1, Fig 4, Fig.5, Fig. 7) and having a nozzle (6) (outer ø 12 mm and inner ø 8 mm and 30 mm length) used as outlet port (7) where the hydrogen and hydrocarbon consisting liquid and gas substances as water and more particularly liquid and gaseous hydrocarbon fuels, such as gasoline, gasohol, diesel fuel, kerosene, propane, natural gas, oil leaves the new generation simplified device and second section of the general main part which is forming the inner cylindrical open bed (3) has (outer ø 42 mm and inner ø 31 mm and length 148 mm) (15, 16) for the central cylindrical longitudinally coextensive magnet assembly forming a linear magnet body (18, 28, 33) and following third end section of the general main part which is forming the inner cylindrical open threaded bed for the demountable threaded brass filled cap has (outer ø 42 mm and inner ø 33 mm and length 25 mm) (3, 18,) and the other main part which is forming the cylindrical demountable threaded brass filled cap (2) Fig. 2, Fig.3, Fig. 6) whereas formed from 2 different sized sections as the first section which is forming the inner cylindrical threaded plug(4) has (outer ø 33 mm and inner ø 6 mm and length 25 mm)(13, 14) (Fig.3, Fig. 6) and the following end section forming the closed side of the cylindrical demountable threaded brass filled cap (2) having two o-rings (14) to prevent leakage of the hydrogen and hydrocarbon consisting liquid and gas substances as water and more particularly liquid and gaseous hydrocarbon fuels, such as gasoline, gasohol, diesel fuel, kerosene, propane, natural gas, oil and the like and nozzle(5) (outer ø 10 mm and inner ø 6 mm and 30 mm length) used as inlet port(8), has (outer ø 42 mm and inner ø 6 mm and length 30 mm) (11, 12) are connected to the pipe lines and providing a narrow annular passageway (4) for the entry(8), of the hydrogen and hydrocarbon consisting liquid and gas substances as water and more particularly liquid and gaseous hydrocarbon fuels, such as gasoline, gasohol, diesel fuel, kerosene, propane, natural gas, oil into the new generation simplified device, with parts removed for the purpose of clarity, in accordance with the present invention showing the inner structure therein;
**FIG.3, FIG. 4****,** **FIG. 5 and FIG.6** are overall isometric views of a internal constituent parts of a new generation simplified device generally having a nonmagnetic cylindrical shaped brass filled outer complete body, which is totally consisted of 3 main parts whereas one of the main parts which is nonmagnetic cylindrical shaped brass filled outer half body has outer total length of (Fig.3, Fig.4, Fig.5, Fig.6) 183 mm (17) and outer ø 42 mm(9, 16), whereas formed from 3 different sized sections generally where the first section of the general main part forming the totally closed side of the nonmagnetic cylindrical shaped brass filled outer body(1) (Fig. 1, Fig 4, Fig.5, Fig. 7), and having a nozzle (6) (outer ø 12 mm and inner ø 8 mm and 30 mm length) used as outlet port (7) where the hydrogen and hydrocarbon consisting liquid and gas substances as water and more particularly liquid and gaseous hydrocarbon fuels, such as gasoline, gasohol, diesel fuel, kerosene, propane, natural gas, oil leaves the new generation simplified device and second section of the general main part which is forming the inner cylindrical open bed (3) has (outer ø 42 mm and inner ø 31 mm and length 148 mm)(15, 16) for the central cylindrical longitudinally coextensive magnet assembly forming a linear magnet body (18, 28, 33) and following third end section of the general main part which is forming the inner cylindrical open threaded bed for the demountable threaded brass filled cap has (outer ø 42 mm and inner ø 33 mm and length 25 mm) (3, 18,) and the other main part which is forming the cylindrical demountable threaded brass filled cap (2) Fig.2, Fig. 3, Fig. 6) whereas formed from 2 different sized sections as the first section which is forming the inner cylindrical threaded plug(4) has (outer ø 33 mm and inner ø 6 mm and length 25 mm)(13, 14) (Fig.3, Fig. 6) and the following end section forming the closed side of the cylindrical demountable threaded brass filled cap(2) having two o-rings (14) to prevent leakage of the hydrogen and hydrocarbon consisting liquid and gas substances as water and more particularly liquid and gaseous hydrocarbon fuels, such as gasoline, gasohol, diesel fuel, kerosene, propane, natural gas, oil and the like and nozzle(5) (outer ø 10 mm and inner ø 6 mm and 30 mm length) used as inlet port(8), has (outer ø 42 mm and inner ø 6 mm and length 30 mm)(11, 12) are connected to the pipe lines and providing a narrow annular passageway (4) for the entry(8), of the hydrogen and hydrocarbon consisting liquid and gas substances as water and more particularly liquid and gaseous hydrocarbon fuels, such as gasoline, gasohol, diesel fuel, kerosene, propane, natural gas, oil into the new generation simplified device, with parts removed for the purpose of clarity, showing the inner structure in accordance with the present invention therein;

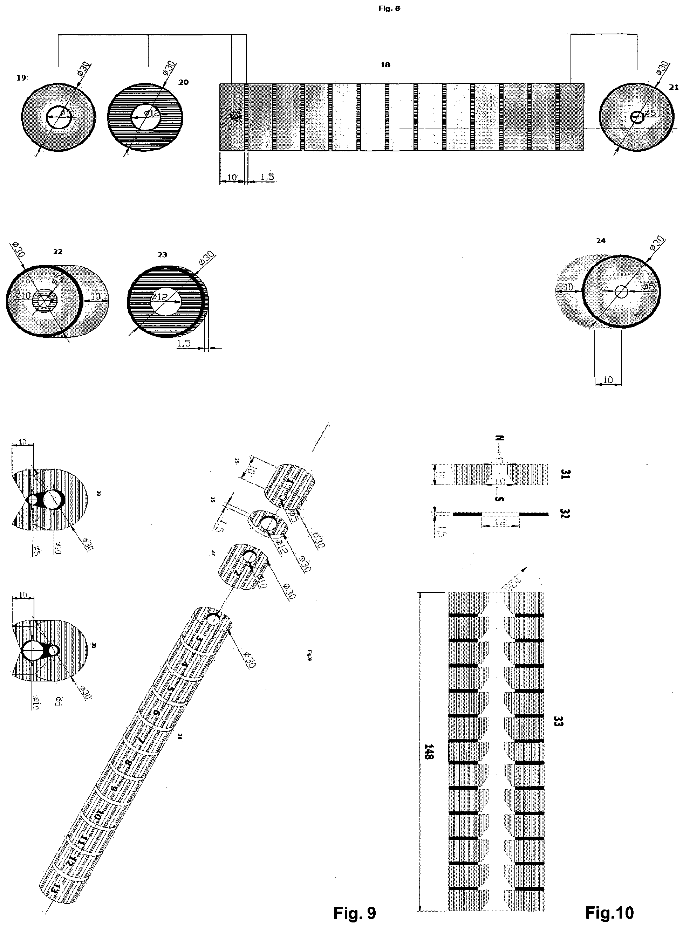

**FIG. 8** is a perspective view and of the the structure and arrangement of the uniquely linear configured, as side-by-side spaced (25, 26, 27, 28, longitudinally coextensive magnet assembly (Fig. 8, Fig.9) forming a linear cylindrical magnet body (18, 28, 33), which is defined as the third main part of the nonmagnetic cylindrical shaped brass filled outer complete body, (adapted to fit into the nonmagnetic cylindrical shaped brass filled outer body by diameter and length) (FIG. 1), consisting of assemblies (Fig.8, Fig.9) of "Thirteen N52 Grade Strong Neodymium Round Ring Countersunk Hole Rare Earth Magnets (19, 22, 25, 27, 29, 30, 31) (outer ø 30 mm, inner ø 5 mm, thickness 10 mm and has a countersunk hole which has max. ø 10 mm (19, 22, 25, 27, 29, 30,31) which are axially magnetized and Magnet (Flat face which has inner ø 5 mm is defined as North Pole (31) and flat face which has countersunk hole which has max. ø 10 mm is defined as South Pole (31))(Nickel, preferably Ni-Cu-Ni, coated, Magnet Pull Force= 37.20 lb, Surface Field By, center= -9,512 gauss, Field By, ring= 5,084 gauss, Magnetic Field Strength= 7,103 gauss Br max=14,800 gauss (Fig. 8 and Fig. 10)" and "Twelve Nonmagnetic PVC Circular Thin Ring Spacers" (outer ø 30 mm, inner ø 12 mm, thickness 1.5 mm (20, 23, 26,32)" forming a coaxial annular magnetizing chamber, therein; **FIG. 9** is a fragmentary sectional perspective top view of two different sides of the "N52 Grade Strong Neodymium Round Ring Countersunk Hole Rare Earth Magnets" (19,21,22,24,25,27,29,30,31)" and "Nonmagnetic PVC Circular Thin Ring Spacer" (20,23,26,32)" therein; **FIG. 10** is a schematic rendition of the a coaxial annular magnetizing chamber in accordance with the present invention which results in a very rapid continuous variation in the orientation of the molecules which, in combination with the changeability of the magnetic field present in the annular magnetizing chamber, creates an extremely violent and frequent movement of the atomic particles of the hydrogen and hydrocarbon consisting liquid and gas substances as water and more particularly liquid and gaseous hydrocarbon fuels, such as gasoline, gasohol, diesel fuel, kerosene, propane, natural gas, oil and like, thus provides a very focused but axially thereby uniformly and continuously longitudinal generated magnetic lines of forces, thereby maximizes the effectiveness of the very high-intensive, sufficient and highly improved magnetic impacts as magnetic flux and molecular excitement upon hydrogen and hydrocarbon consisting liquid and gas substances as water and more particularly liquid and gaseous hydrocarbon fuels, such as gasoline, gasohol, diesel fuel, kerosene, propane, natural gas, oil like, in order to reach an improved efficiency of treatment of hydrogen and hydrocarbon consisting liquid and gas substances as water and more particularly liquid and gaseous hydrocarbon fuels, such as gasoline, gasohol, diesel fuel, kerosene, propane, natural gas, oil and the like, therein;
**FIG. 11** is a longitudinal general view of the nonmagnetic cylindrical shaped brass filled outer body of the new generation device for treating hydrogen and hydrocarbon consisting liquid and gas substances as water and more particularly liquid and gaseous hydrocarbon fuels, such as gasoline, gasohol, diesel fuel, kerosene, propane, natural gas, oil and the like, thereof;
This invention is based upon the discovery that the significantly high-intensive magnetically treating hydrogen and hydrocarbon consisting liquid and gas substances as water and more particularly liquid and gaseous hydrocarbon fuels, such as gasoline, gasohol, diesel fuel, kerosene, propane, natural gas, oil and the like can be effectively accomplished by a cylindrical shaped simplified new generation device by employing the unique features and properties "N52 Grade Strong Neodymium Round Ring Countersunk Hole Rare Earth Magnets" (22, 29, 30) . It has been found that the new generation device of this invention employing the "N52 Grade Strong Neodymium Round Ring Countersunk Hole Rare Earth Magnets" (23) are very effective for high-intensive magnetically treating hydrogen and hydrocarbon consisting liquid and gas substances as water and more particularly liquid and gaseous hydrocarbon fuels, such as gasoline, gasohol, diesel fuel, kerosene, propane, natural gas, oil and the like without involving the complexity of and consequently the cost involved in previous devices.

This invention is further based upon an improved method of the realization of a nonmagnetic cylindrical shaped brass filled outer complete body consisted of 2 nozzles which are connected to the pipe lines and providing a narrow annular passageway (4) for the entry(8), of the hydrogen and hydrocarbon consisting liquid and gas substances as water and more particularly liquid and gaseous hydrocarbon fuels, such as gasoline, gasohol, diesel fuel, kerosene, propane, natural gas, oil into the new generation simplified device and moves with a helical turbulent centripetal motion (34) directly through the center opening of the uniquely linear configured, as side-by-side spaced (25, 26, 27, 28, longitudinally coextensive magnet assembly forming a linear cylindrical magnet body (18, 28, 33), (adapted to fit into the nonmagnetic cylindrical shaped brass filled outer body by diameter and length) consisting of assemblies of "Thirteen N52 Grade Strong Neodymium Round Ring Countersunk Hole Rare Earth Magnets (19, 22, 25, 27, 29, 30,31) which are axially magnetized and "Twelve Nonmagnetic PVC Circular Thin Ring Spacers" and forming a coaxially annular magnetizing chamber (34) thus provides a very focused but axially thereby uniformly and continuously longitudinal generated magnetic lines of forces, thereby maximizes the effectiveness of the very high-intensive, sufficient and highly improved magnetic impacts as magnetic flux and molecular excitement upon hydrogen and hydrocarbon consisting liquid and gas substances as water and more particularly liquid and gaseous hydrocarbon fuels, such as gasoline, gasohol, diesel fuel, kerosene, propane, natural gas, oil like, in order to reach an improved efficiency of treatment of hydrogen and hydrocarbon consisting liquid and gas substances as water and more particularly liquid and gaseous hydrocarbon fuels, such as gasoline, gasohol, diesel fuel, kerosene, propane, natural gas, oil and the like, for their beneficiaries.

In its basic aspect, device of the present invention is a new generation simplified device generally having a nonmagnetic cylindrical shaped brass filled outer complete body, which is totally consisted of 3 main parts whereas one of the main parts which is nonmagnetic cylindrical shaped brass filled outer half body has outer total length of (183 mm (17) and outer ø 42 mm (9, 16), whereas formed from 3 different sized sections generally where the first section of the general main part forming the totally closed side of the nonmagnetic cylindrical shaped brass filled outer body(1), and having a nozzle (6) (outer ø 12 mm and inner ø 8 mm and 30 mm length) used as outlet port (7) where the hydrogen and hydrocarbon consisting liquid and gas substances as water and more particularly liquid and gaseous hydrocarbon fuels, such as gasoline, gasohol, diesel fuel, kerosene, propane, natural gas, oil leaves the new generation simplified device and second section of the general main part which is forming the inner cylindrical open bed (3) has (outer ø 42 mm and inner ø 31 mm and length 148 mm)(15, 16) for the central cylindrical longitudinally coextensive magnet assembly forming a linear magnet body (18, 28, 33) and following third end section of the general main part which is forming the inner cylindrical open threaded bed for the demountable threaded brass filled cap has (outer ø 42 mm and inner ø 33 mm and length 25 mm) (3,18), and the other main part which is forming the cylindrical demountable threaded brass filled cap (2) whereas formed from 2 different sized sections as the first section which is forming the inner cylindrical threaded plug(4) has (outer ø 33 mm and inner ø 6 mm and length 25 mm)(13, 14) and the following end section forming the closed side of the cylindrical demountable threaded brass filled cap(2) having two o-rings (14) to prevent leakage of the hydrogen and hydrocarbon consisting liquid and gas substances as water and more particularly liquid and gaseous hydrocarbon fuels, such as gasoline, gasohol, diesel fuel, kerosene, propane, natural gas, oil and the like and nozzle (5) (outer ø 10 mm and inner ø 6 mm and 30 mm length) used as inlet port (8), has (outer ø 42 mm and inner ø 6 mm and length 30 mm)(11, 12) are connected to the pipe lines and providing a narrow annular passageway (4) for the entry (8) of the hydrogen and hydrocarbon consisting liquid and gas substances as water and more particularly liquid and gaseous hydrocarbon fuels, such as gasoline, gasohol, diesel fuel, kerosene, propane, natural gas, oil into the new generation simplified device.

This preferred configuration; when in position on each end of the "N52 Grade Strong Neodymium Round Ring Countersunk Hole Rare Earth Magnets (19, 22, 25, 27, 29, 30, 31) (outer ø 30 mm, inner ø 5 mm, thickness 10 mm and has a countersunk hole which has max. ø 10 mm (19, 22, 25, 27, 29, 30,31) the nonmagnetic circular thin rings (outer ø 30 mm, inner ø 12 mm, thickness 1.5 mm) (20, 23, 26,32)" are used as a spacer in order to form a gap between two "N52 Grade Strong Neodymium Round Ring Countersunk Hole Rare Earth Magnets" (19, 22, 25, 27, 29, 30,31) in order to a provide improvement of the magnetic impacts between the two "N52 Grade Strong Neodymium Round Ring Countersunk Hole Rare Earth Magnets" (19, 22, 25, 27, 29, 30, 31) and further enhancing the treatment of hydrogen and hydrocarbon consisting liquid and gas substances as water and more particularly liquid and gaseous hydrocarbon fuels, such as gasoline, gasohol, diesel fuel, kerosene, propane, natural gas, oil and the like more uniform and efficiently with the simple technique invented by me, improved simplified new generation device of this invention.

Accordingly I had found that, when uniquely linear configured, as side-by-side spaced (25, 26, 27, 28, longitudinally coextensive magnet assembly forming a linear cylindrical magnet body (18, 28, 33), consisting of assemblies of "Thirteen N52 Grade Strong Neodymium Round Ring Countersunk Hole Rare Earth Magnets (19, 22, 25, 27, 29, 30, 31) (outer ø 30 mm, inner ø 5 mm, thickness 10 mm and has a countersunk hole which has max. ø 10 mm (19, 22, 25, 27, 29, 30,31) which are axially magnetized and Magnet (Flat face which has inner ø 5 mm is defined as North Pole (31) and flat face which has countersunk hole which has max. ø 10 mm is defined as South Pole (31) (Nickel, preferably Ni-Cu, Ni, coated, Magnet Pull Force= 37.20 lb, Surface Field By, center= -9,512 gauss, Field By, ring= 5,084 gauss, Magnetic Field Strength= 7,103 gauss Br max=14,800 gauss (Fig. 8 and Fig. 10)" and "Twelve Nonmagnetic PVC Circular Thin Ring Spacers" (outer ø 30 mm, inner ø 12 mm, thickness 1.5 mm (20, 23, 26,32)" and "Thirteen N52 Grade Strong Neodymium Round Ring Countersunk Hole Rare Earth Magnets" (19, 22, 25, 27, 29, 30,31) and "Twelve Nonmagnetic PVC Circular Thin Ring Spacers" (20, 23, 26,32)" are positioned beginning with one "N52 Grade Strong Neodymium Round Ring Countersunk Hole Rare Earth Magnets" (19, 22, 25, 27, 29, 30,31) (magnets are positioned with opposite poles facing one another (Fig. 8), so that the magnets are attracting towards one another and after one Nonmagnetic PVC Circular Thin Ring Spacer (20, 23, 26,32)" used in order to provide a gap between each of the 2 magnets), forming a coaxial annular magnetizing chamber, which results in a very rapid continuous variation in the orientation of the molecules which, in combination with the changeability of the magnetic field present in the annular magnetizing chamber, creates an extremely violent and frequent movement of the atomic particles of the hydrogen and hydrocarbon consisting liquid and gas substances as water and more particularly liquid and gaseous hydrocarbon fuels, such as gasoline, gasohol, diesel fuel, kerosene, propane, natural gas, oil and like, thus provides a very focused but axially thereby uniformly and continuously longitudinal generated magnetic lines of forces, thereby maximizes the effectiveness of the very high-intensive, sufficient and highly improved magnetic impacts as magnetic flux and molecular excitement upon hydrogen and hydrocarbon consisting liquid and gas substances as water and more particularly liquid and gaseous hydrocarbon fuels, such as gasoline, gasohol, diesel fuel, kerosene, propane, natural gas, oil like, in order to reach an improved efficiency of treatment of hydrogen and hydrocarbon consisting liquid and gas substances as water and more particularly liquid and gaseous hydrocarbon fuels, such as gasoline, gasohol, diesel fuel, kerosene, propane, natural gas, oil and the like.

As used herein, the term "magnet" means significantly, "N52 Grade Strong Neodymium Round Ring Countersunk Hole Rare Earth Magnets (19, 22, 25, 27, 29, 30, 31) (outer ø 30 mm, inner ø 5 mm, thickness 10 mm and has a countersunk hole which has max. ø 10 mm (19, 22, 25, 27, 29, 30,31) which are axially magnetized and Magnet (Flat face which has inner ø 5 mm is defined as North Pole (31) and flat face which has countersunk hole which has max. ø 10 mm is defined as South Pole (31))(Nickel, preferably Ni-Cu-Ni, coated, Magnet Pull Force= 37.20 lb, Surface Field By, center= -9,512 gauss, Field By, ring= 5,084 gauss, Magnetic Field Strength= 7,103 gauss Br max=14,800 gauss (Fig. 8 and Fig. 10)" According to the tests which I had done, I have reached the maximum improved efficiency for treatment of hydrogen and hydrocarbon consisting liquid and gas substances as water and more particularly liquid and gaseous hydrocarbon fuels, such as gasoline, gasohol, diesel fuel, kerosene, propane, natural gas, oil and the like by using "Thirteen N52 Grade Strong Neodymium Round Ring Countersunk Hole Rare Earth Magnets" (outer ø 30 mm, inner ø 5 mm, thickness 10 mm and has a countersunk hole which has max. ø 10 mm) which is axially magnetized and Magnet (Flat face which has inner ø 5 mm is defined as North Pole and flat face which has countersunk hole which has max. ø 10 mm is defined as South Pole)(Nickel, preferably Ni-Cu-Ni, coated, Magnet Pull Force= 37.20 lb, Surface Field By, center= -9,512 gauss, Field By, ring= 5,084 gauss, Magnetic Field Strength= 7,103 gauss Br max=14,800 gauss (FIG. 1) and by using twenty six N52 Grade Strong Neodymium Round Ring Countersunk Hole Rare Earth Magnets" (outer ø 30 mm, inner ø 5 mm, thickness 10 mm and has a countersunk hole which has max. ø 10 mm) for extra ordinary vehicle and finally it is realized by me that by using either a Grade N35, N38, N40, N42, N45; N50 Strong Neodymium (NdFeB) Round Ring Countersunk Hole Rare Earth Magnets with different sizes according to the outer diameter, inner diameter and thickness are resulted with lower efficiency of the very high-intensive, sufficient and highly improved magnetic impacts as magnetic flux and molecular excitement upon hydrogen and hydrocarbon consisting liquid and gas substances as water and more particularly liquid and gaseous hydrocarbon fuels, such as gasoline, gasohol, diesel fuel, kerosene, propane, natural gas, oil like.

The term "non-magnetic spacer" means significantly circular thin ring made of PVC hard material either other non-magnetic materials can be used. (Outer ø 30 mm, inner ø 12 mm, thickness 1.5 mm) (20, 23, 26, 32) (According to the tests which I had done I have reached the maximum efficiency upon fluids as water and more particularly liquid and gaseous hydrocarbon fuels, such as gasoline, gasohol, diesel fuel, kerosene, propane, natural gas, oil and the like using a Nonmagnetic PVC Circular Thin Ring Spacer as spacer providing a gap between 2 said magnets has a thickness of 1.5 mm.) (I have realized that using a PVC circular ring spacer between two said magnets we have calculated the magnetic field strength at the center of the said is 7103 Gauss.)

The term "nonmagnetic" means significantly bronze-filled (According to the tests which I had done, I have reached the maximum efficiency upon hydrogen and hydrocarbon consisting liquid and gas substances as water and more particularly liquid and gaseous hydrocarbon fuels, such as gasoline, gasohol, diesel fuel, kerosene, propane, natural gas, oil and the like), any material such as PVC, kestamid, aluminum, certain stainless steels and other materials which are not attracted to or affected by the magnet or magnetic field.

The term "magnetic" means a material, such as a ferromagnetic metal, which is attracted and affected by the magnetic field produced by the uniquely linear configured, as side-by-side spaced, longitudinally coextensive magnet assembly (Fig.9) forming a linear magnet body (18)

The term "ferromagnetic" is used to describe materials having a high magnetic permeability and saturation point and which are attracted to a magnet, i.e. such materials as iron, nickel, cobalt, etc.

In an illustration of an alternative embodiment of the present invention, (Fig. 8 and Fig. 9) shows the longitudinally coextensive magnet assembly forming a linear magnet body (18) made up of a plurality of of "Thirteen N52 Grade Strong Neodymium Round Ring Countersunk Hole Rare Earth Magnets (19, 22, 25, 27, 29, 30, 31) (outer ø 30 mm, inner ø 5 mm, thickness 10 mm and has a countersunk hole which has max. ø 10 mm (19, 22, 25, 27, 29, 30, 31) having circular openings at in the center of each and "Twelve Nonmagnetic PVC Circular Thin Ring Spacers" (outer ø 30 mm, inner ø 12 mm, thickness 1.5 mm (20, 23, 26,32)" positioned between and alternating with the Strong Neodymium (NdFeB) Round Ring Countersunk Hole Rare Earth Magnets (19, 22, 25, 27, 29, 30,31). While it is to be understood that the device of this invention can be constructed to provide any degree of power or intensity of the magnetic field by increasing the size and/or number of the Strong Neodymium (NdFeB) Round Ring Countersunk Hole Rare Earth Magnets and number of nonmagnetic circular ring spacers.

Fig.8, Fig. 9 and Fig. 10 illustrates another preferred feature of the Nonmagnetic PVC Circular Thin Ring Spacers aspect of the invention in that the diameter of the circular opening in the center of each Nonmagnetic PVC Circular Thin Ring Spacers is bigger than the diameter of the circular opening in the center of the N52 Grade Strong Neodymium Round Ring Countersunk Hole Rare Earth Magnets. The extension of circular ring spacer at the center opening beyond the center opening of the "N52 Grade Strong Neodymium Round Ring Countersunk Hole Rare Earth Magnets" serves to enhance and intensify and focus the magnetic field in the circular opening at the center of the longitudinally coextensive magnet assembly (Fig.9) forming a linear magnet body (18).

It is believed that the unusual low effectiveness of the devices in the market which are currently used by the beneficiaries, will be improved by a new generation simplified device as illustrated in Fig. 11 generally having a nonmagnetic cylindrical shaped brass filled outer complete body, which is invented by me, and defined in this new generation simplified device as illustrated in Fig. 11 generally having a nonmagnetic cylindrical shaped brass filled outer complete body, are connected to the pipe lines for the entry(8) of the hydrogen and hydrocarbon consisting liquid and gas substances as water and more particularly liquid and gaseous hydrocarbon fuels, such as gasoline, gasohol, diesel fuel, kerosene, propane, natural gas, oil into the new generation simplified device and providing a narrow annular passageway (34) directly through the center opening of the uniquely linear configured, as side-by-side spaced (25, 26, 27, 28), longitudinally coextensive magnet assembly (Fig. 8, Fig.9) forming a linear cylindrical magnet body (18, 28, 33), consisting of assemblies (Fig.8, Fig.9) of "Thirteen N52 Grade Strong Neodymium Round Ring Countersunk Hole Rare Earth Magnets (19, 22, 25, 27, 29, 30, 31) (outer ø 30 mm, inner ø 5 mm, thickness 10 mm and has a countersunk hole which has max. ø 10 mm (19, 22, 25, 27, 29, 30,31) which are axially magnetized and "Twelve Nonmagnetic PVC Circular Thin Ring Spacers" (outer ø 30 mm, inner ø 12 mm, thickness 1.5 mm (20, 23, 26,32)" forming a coaxially annular magnetizing chamber thus provides a very focused but axially thereby uniformly and continuously longitudinal generated magnetic lines of forces and helical turbulent motion which results in a very rapid continuous variation in the orientation of the molecules which, in combination with the changeability of the magnetic field present in the annular magnetizing chamber, creates an extremely violent and frequent movement of the atomic particles of the hydrogen and hydrocarbon consisting liquid and gas substances as water and more particularly liquid and gaseous hydrocarbon fuels, such as gasoline, gasohol, diesel fuel, kerosene, propane, natural gas, oil passing directly through the center opening of the uniquely linear configured, as side-by-side spaced (25, 26, 27, 28, longitudinally coextensive magnet assembly (Fig. 8, Fig.9) forming a linear cylindrical magnet body (18, 28, 33) defined as coaxial annular magnetizing chamber by centripetal motion, thereby maximizes the effectiveness of the very high-intensive, sufficient and highly improved magnetic impacts as magnetic flux and molecular excitement of the atoms of its molecules arc therefore able to experience the well-known forced orientation by the magnetic field, ie the considerable molecular distortion created by the high intensive magnetic forces (millions of dynes per cm²), which facilitates disaggregation of the particularly liquid and gaseous hydrocarbon fuels, such as gasoline, gasohol, diesel fuel, kerosene, propane, natural gas, oil and the like molecule and the said physical distortion of the molecules results in easier or complete combustion thus resulting with increase of 30-60% mileage of vehicle, Reduction of between %40 to %80 in HC emission & other pollutants, avoided clogging problems in Diesel Engine, between %25 to %50 more particularly hydrogen and hydrocarbon consisting liquid and gaseous hydrocarbon fuels, such as gasoline, gasohol, diesel fuel, kerosene, propane, natural gas, oil and the like saving, Eco friendly, Provides 30% extra life for expensive catalytic converter, Reduce maintenance of engine most importantly does not require any design modification & finally cost saving for their beneficiaries.

This present invention is defining a new generation simplified device and method to produce a near complete burning of particularly liquid and gaseous hydrocarbon fuels in combustion chamber by getting the molecules realigned and actively into locked with oxygen during combustion because of the reason of hydrocarbons change their orientation and molecules in them change their configuration during the fuel flow through powerful magnetic field created by the new generation simplified device and therefore is to provide significantly improved molecular excitement and turbulence in a hydrogen and hydrocarbon consisting liquid and gas substances as water and more particularly liquid and gaseous hydrocarbon fuels, such as gasoline, gasohol, diesel fuel, kerosene, propane, natural gas, oil and the like so that re-polymerization is more effectively resisted and improved fuel efficiency is achieved.

It has been found that, according to the present invention, a new generation simplified device as illustrated in Fig. 11 generally having a nonmagnetic cylindrical shaped brass filled outer complete body, which is totally consisted of 3 main parts whereas one of the main parts which is nonmagnetic cylindrical shaped brass filled outer half body has outer total length of (Fig.3, Fig.4, Fig.5, Fig.6) 183 mm (17) and outer ø 42 mm(9, 16), whereas formed from 3 different sized sections generally where the first section of the general main part forming the totally closed side of the nonmagnetic cylindrical shaped brass filled outer body(1) (Fig. 1, Fig 4, Fig.5, Fig. 7), and having a nozzle (6) (outer ø 12 mm and inner ø 8 mm and 30 mm length) used as outlet port (7) where the hydrogen and hydrocarbon consisting liquid and gas substances as water and more particularly liquid and gaseous hydrocarbon fuels, such as gasoline, gasohol, diesel fuel, kerosene, propane, natural gas, oil leaves the new generation simplified device and second section of the general main part which is forming the inner cylindrical open bed (3) has (outer ø 42 mm and inner ø 31 mm and length 148 mm)(15, 16) for the central cylindrical longitudinally coextensive magnet assembly forming a linear magnet body (18, 28, 33) and following third end section of the general main part which is forming the inner cylindrical open threaded bed for the demountable threaded brass filled cap has (outer ø 42 mm and inner ø 33 mm and length 25 mm) (3, 18,) and the other main part which is forming the cylindrical demountable threaded brass filled cap (2) Fig.2, Fig. 3, Fig. 6) whereas formed from 2 different sized sections as the first section which is forming the inner cylindrical threaded plug(4) has (outer ø 33 mm and inner ø 6 mm and length 25 mm)(13, 14) (Fig.3, Fig. 6) and the following end section forming the closed side of the cylindrical demountable threaded brass filled cap(2) having two o-rings (14) to prevent leakage of the hydrogen and hydrocarbon consisting liquid and gas substances as water and more particularly liquid and gaseous hydrocarbon fuels, such as gasoline, gasohol, diesel fuel, kerosene, propane, natural gas, oil and the like and nozzle(5) (outer ø 10 mm and inner ø 6 mm and 30 mm length) used as inlet port(8), has (outer ø 42 mm and inner ø 6 mm and length 30 mm)(11, 12) are connected to the pipe lines for the entry(8) of the hydrogen and hydrocarbon consisting liquid and gas substances as water and more particularly liquid and gaseous hydrocarbon fuels, such as gasoline, gasohol, diesel fuel, kerosene, propane, natural gas, oil into the new generation simplified device and providing a narrow annular passageway directly through the center opening of the uniquely linear configured, as side-by-side spaced (25, 26, 27, 28), longitudinally coextensive magnet assembly (Fig. 8, Fig.9) forming a linear cylindrical magnet body (18, 28, 33), which is defined as the third main part of the nonmagnetic cylindrical shaped brass filled outer complete body, (adapted to fit into the nonmagnetic cylindrical shaped brass filled outer body by diameter and length) (FIG. 1), consisting of assemblies (Fig.8, Fig.9) of "Thirteen N52 Grade Strong Neodymium Round Ring Countersunk Hole Rare Earth Magnets (19, 22, 25, 27, 29, 30, 31) (outer ø 30 mm, inner ø 5 mm, thickness 10 mm and has a countersunk hole which has max. ø 10 mm (19, 22, 25, 27, 29, 30,31) which are axially magnetized and Magnet (Flat face which has inner ø 5 mm is defined as North Pole (31) and flat face which has countersunk hole which has max. ø 10 mm is defined as South Pole (31))(Nickel, preferably Ni-Cu-Ni, coated, Magnet Pull Force= 37.20 lb, Surface Field By, center= -9,512 gauss, Field By, ring= 5,084 gauss, Magnetic Field Strength= 7,103 gauss Br max=14,800 gauss (Fig. 8 and Fig. 10)" and "Twelve Nonmagnetic PVC Circular Thin Ring Spacers" (outer ø 30 mm, inner ø 12 mm, thickness 1.5 mm (20, 23, 26,32)" forming a coaxially annular magnetizing chamber thus provides a very focused but axially thereby uniformly and continuously longitudinal generated magnetic lines of forces and helical turbulent motion which results in a very rapid continuous variation in the orientation of the molecules which, in combination with the changeability of the magnetic field present in the annular magnetizing chamber, creates an extremely violent and frequent movement of the atomic particles of the hydrogen and hydrocarbon consisting liquid and gas substances as water and more particularly liquid and gaseous hydrocarbon fuels, such as gasoline, gasohol, diesel fuel, kerosene, propane, natural gas, oil passing directly through the center opening of the uniquely linear configured, as side-by-side spaced (25, 26, 27, 28, longitudinally coextensive magnet assembly (Fig. 8, Fig.9) forming a linear cylindrical magnet body (18, 28, 33) defined as coaxial annular magnetizing chamber by centripetal motion, thereby maximizes the effectiveness of the very high-intensive, sufficient and highly improved magnetic impacts as magnetic flux and molecular excitement upon hydrogen and hydrocarbon consisting liquid and gas substances as water and more particularly liquid and gaseous hydrocarbon fuels, such as gasoline, gasohol, diesel fuel, kerosene, propane, natural gas, oil like, in order to reach an improved efficiency of treatment of hydrogen and hydrocarbon consisting liquid and gas substances as water and more particularly liquid and gaseous hydrocarbon fuels, such as gasoline, gasohol, diesel fuel, kerosene, propane, natural gas, oil and the like.

As an example of the present invention, the new generation simplified device was installed on an AUDI A-6 2009 2.0 TDI car of me. The car was tested on a dynamoneter before and after the installation of the above device in the fuel line leading to the diesel engine. The dynamoneter tests showed that the car produced a 35 % increase in horse power and produced a 65.4% decrease in smoke emission and produced a 35 % decreased in diesel consumption after the above new generation device was installed in the engine fuel line.

This device was installed on a Mazda 2.5. Diesel 100 HP 1988 pick-up car. The car was tested on a dynamoneter before and after the installation of the above device in the fuel line leading to the diesel engine. The dynamoneter tests showed that the car produced a 30 % increase in horse power and produced a 60.1% decrease in smoke emission and produced a 30 % decreased in diesel consumption after the above new generation device was installed in the engine fuel line.

With reference to the aforesaid Figure 11, the new generation device forms a portion of the pipe carrying particularly liquid and gaseous hydrocarbon fuels prior to its use. In the case of an internal combustion engine fuel, this portion is situated close to the equipment for feeding the fuel into the engine. In the case of gas oil or kerosene for use in boilers or turbines, this portion is situated close to the combustion chamber. In the case of domestic fuel gas (for example methane), this portion is situated close to the flame. The device must be fitted with connectors for its connection to the fluid-carrying pipe which are suitable for its specific use. If it is to be used domestically in water pipes these connectors are preferably of usual threaded type. If it is to be used in internal combustion engines, for which the particularly liquid and gaseous hydrocarbon fuels flows through rubber hoses, the device could be provided with two nozzles (7, 8) to be connected to them by insertion followed by clamping by usual hose clips on the portions.

Hydrocarbon molecules treated with a high magnetic field gained from invented new generation device, to de-cluster forming smaller associates with higher specific surface for the reaction with oxygen leading to improved combustion and in accordance with van der waals discovery of a weak clustering force, there is a strong binding of hydrocarbons with oxygen in such magnetized fuel, which ensures optimal burning of the mixture in the engine chamber and the consequence of treating particularly liquid and gaseous hydrocarbon fuels with a high magnetic field is improved combustion of particularly liquid and gaseous hydrocarbon fuels and consequently increased engine power as well as reduced fuel consumption and additional consequence of improved fuel combustion is reduced emissions of carbon particles, carbon monoxide and hydrocarbons.

It is hence clear that according to the present innovation; a new generation simplified device of the present invention is a nonmagnetic cylindrical shaped brass filled outer body (1) providing a narrow annular passageway are connected to the pipe lines for the passage of the hydrogen and hydrocarbon consisting liquid and gas substances as water and more particularly liquid and gaseous hydrocarbon fuels, such as gasoline, gasohol, diesel fuel, kerosene, propane, natural gas, oil and the like directly through the center opening of the uniquely linear configured, as side-by-side spaced, longitudinally coextensive magnet assembly (Fig.9) forming a linear magnet body (18) (adapted to fit into the nonmagnetic cylindrical shaped brass outer body by diameter and length) (FIG. 1), consisting of assemblies (Fig.8, Fig.9) of "Thirteen N52 Grade Strong Neodymium Round Ring Countersunk Hole Rare Earth Magnets (19, 22, 25, 27, 29, 30, 31) which are axially magnetized and "Twelve Nonmagnetic PVC Circular Thin Ring Spacers" (20, 23, 26,32)" provides a very focused but axially thereby uniformly and continuously longitudinal generated magnetic lines of forces and turbulence (34) which maximizes the effectiveness of the very high-intensive, sufficient and highly improved magnetic impacts as magnetic flux and molecular excitement the atoms of its molecules arc therefore able to experience the well-known forced orientation by the magnetic field, ie the considerable molecular distortion created by the magnetic forces (millions of dynes per cm²), which facilitates disaggregation of the hydrogen and hydrocarbon consisting liquid and gas substances as water and more particularly liquid and gaseous hydrocarbon fuels, such as gasoline, gasohol, diesel fuel, kerosene, propane, natural gas, oil and the like molecule and the said physical distortion of the molecules results in easier or complete combustion.

In practice, the particularly liquid and gaseous hydrocarbon fuels moves with partially helical turbulent motion (Fig. 10). This results in a very rapid continuous variation in the orientation of the molecules which, in combination with the changeability of the magnetic field present in the annular chamber, creates an extremely violent and frequent movement of the atomic particles. In this respect, starting from the N pole (31) present on the "N52 Grade Strong Neodymium Round Ring Countersunk Hole Rare Earth Magnet" in the entry region (Fig. 8, Fig. 9, Fig. 10), the fluid passes into the central cylindrical longitudinally coextensive magnet assembly forming a linear magnet body (18, 28) consisting of assemblies (Fig.8, Fig. 9) of "Thirteen N52 Grade Strong Neodymium Round Ring Countersunk Hole Rare Earth Magnets (19, 22, 25, 27, 29, 30, 31) and "Twelve Nonmagnetic PVC Circular Thin Ring Spacers (20, 23, 26,32)" and exit from the S pole present on the "N52 Grade Strong Neodymium Round Ring Countersunk Hole Rare Earth Magnet" in the entry region contact with the S pole (31) present on the "N52 Grade Strong Neodymium Round Ring Countersunk Hole Rare Earth Magnet" in the exit region. The particularly liquid and gaseous hydrocarbon fuels is subjected to a gradual complete polarity reversal of the magnetic field (33), this variation being complemented by another very high frequency variation in the spin orientation connected with the vorticity of the molecules flowing through the interior of the annular chamber of the central cylindrical longitudinally coextensive magnet assembly (Fig.8, Fig. 9) forming a linear magnet body(18, 28, 33) consisting of assemblies of "Thirteen N52 Grade Strong Neodymium Round Ring Countersunk Hole Rare Earth Magnets" (19, 22, 25, 27, 29, 30, 31) which is axially magnetized and "Twelve Nonmagnetic PVC Circular Thin Ring Spacers" (20, 23, 26,32)" .

Magnetization of particularly liquid and gaseous hydrocarbon fuels, breaks down the bonds between hydrocarbon chains which results in decreased density, surface tension and, hence smaller particulars and droplets during atomization or injection within an internal combustion engine whereby smaller particles and droplets Causes increased evaporation rates, improved mixing of particularly liquid and gaseous hydrocarbon fuels and oxidizer, and improved promotion of oxidation, thus the net effect is an increase in the rate of combustion, an increase in power, and reduced pollutants.

Increased oxidation of the hydrocarbon fuel causes several effects like faster and more complete oxidation results in more rapid and more complete combustion of the fuel and faster and more efficient combustion creates a more concentrated and more forceful driving force on the pistons of an internal combustion engine, albeit for a shorter duration of time, thus result in the desirable effect of increasing the engine's revolutions per minute (rpm) for the same amount of fuel burned whre the net effect is increased power and/or a corresponding decrease in fuel consumption for a given power output.

## Claims

1. A device suitable for performing the method of claim 2, said device consisting of three main parts, wherein
- the first main part is a non-magnetic cylindrical shaped brass filled outer body (1) having an outer length of 183 mm and outer diameter of 42 mm and being formed from two different sized sections, wherein
∘ the first section forms a totally closed side of the non-magnetic cylindrical shaped body (1) and has a nozzle (6) being connectable to a pipe line; and
∘ the second section forms a inner cylindrical open bed for a central cylindrical longitudinally coextensive magnet assembly forming a linear magnet body;
- the second main part forms a cylindrical demountable threaded brass filled cap (2) formed from two different sized sections, wherein
∘ the first section forms the inner cylindrical threaded plug (4); and
∘ the second section, which is the following end section, forms a closed side of the cylindrical demountable cap (2) having a nozzle (5) being connectable to a pipe line and providing a narrow annular passageway;
- the third main part is the longitudinally coextensive magnet assembly forming a linear cylindrical magnet body (33) consisting of assemblies of:
∘ magnets (31) which are axially magnetized, and
∘ thin ring spacers (32),
and forming a coaxial annular magnetizing chamber;
**characterized in that**:
- the first main part comprises a third different sized section which forms the inner cylindrical open threaded bed for the demountable threaded brass filled cap (2), wherein the third different sized section is an end section of the first main part;
- the second section of the second main part comprises two o-rings (14);
- the magnets (31) are thirteen ring-shaped N52 Grade Strong Neodymium Round Ring Countersunk Rare Earth magnets, each magnet having a countersunk hole, wherein the flat face which has the countersunk hole is defined as South Pole and the flat face opposite to the countersunk hole is defined as North Pole, each magnet (31) having an outer diameter of 30 mm, an inner diameter of 5 mm, a thickness of 10 mm and each countersunk hole having an diameter of max. 10 mm;
- the magnets being Nickel, preferably Ni-Cu-Ni, coated, having a Magnet Pull Force of 165.47 N (37.20 lb), a Surface Field By, center = - 0.9512 T (-9,512 gauss), Field By, ring = 0.5084 T (5,084 gauss), Magnetic Field Strength = 0.7103 T (7,103 gauss), Br max = 1.48 T (14,800 gauss); and
- the ring spacers (32) are twelve non-magnetic PVC circular thin ring spacers, wherein the diameter of the circular opening in the center of each ring spacer is bigger than the diameter of the circular opening in the center of the magnets (31), each ring spacer (32) having an outer diameter of 30 mm, an inner diameter of 12 mm and a thickness of 1.5 mm.

2. Method of using the device according to claim 1 for treating hydrogen and hydrocarbon consisting liquid and gas substances as water and more particularly liquid and gaseous hydrocarbon fuels, such as gasoline, gasohol, diesel fuel, kerosene, propane, natural gas, oil and the like, in order to reach an improved efficiency of treatment of hydrogen and hydrocarbon consisting liquid and gas substances as water and more particularly liquid and gaseous hydrocarbon fuels, such as gasoline, gasohol, diesel fuel, kerosene, propane, natural gas, oil and the like, wherein:
- the nozzle (6) of the first main part is used as outlet port (7) for the hydrogen and hydrocarbon consisting liquid and gas substances;
- the nozzle (5) of the second main part is used as inlet port (8) for the hydrogen and hydrocarbon consisting liquid and gas substances and provides a narrow annular passageway (4);
- the introduced hydrogen and hydrocarbon consisting liquid and gas substances move with a helical turbulent centripetal motion directly through the center opening of the third main part; and
- in the third main part the coaxial annular magnetizing chamber is formed which results in a very rapid continuous variation in the orientation of the molecules which, in combination with the changeability of the magnetic field present in the annular magnetizing chamber, creates an extremely violent and frequent movement of the atomic particles of the hydrogen and hydrocarbon consisting liquid and gas substances, thus provides a very focused but axially thereby uniformly and continuously longitudinal generated magnetic lines of forces and thereby maximizes the effectiveness of the very high-intensive, sufficient and highly improved magnetic impacts as magnetic flux and molecular excitement upon hydrogen and hydrocarbon consisting liquid and gas substances.

## Patentansprüche

1. Vorrichtung, die geeignet ist, das Verfahren nach Anspruch 2 durchzuführen, wobei die Vorrichtung aus drei Hauptteilen besteht, wobei
- der erste Hauptteil ein nichtmagnetischer, zylindrischer, messinggefüllter Außenkörper (1) ist, der eine Außenlänge von 183 mm und einen Außendurchmesser von 42 mm aufweist und aus zwei unterschiedlich großen Abschnitten ausgebildet ist, wobei
∘ der erste Abschnitt eine vollständig geschlossene Seite des nichtmagnetischen, zylindrischen Körpers (1) ausbildet und eine Düse (6) aufweist, die an eine Rohrleitung angeschlossen werden kann; und
∘ der zweite Abschnitt ein inneres, zylindrisches, offenes Bett für eine mittige, zylindrische, in Längsrichtung deckungsgleiche Magnetanordnung ausbildet, die einen linearen Magnetkörper ausbildet;
- der zweite Hauptteil eine zylindrische, abnehmbare, messinggefüllte Gewindekappe (2) ausbildet, die aus zwei unterschiedlich großen Abschnitten ausgebildet ist, wobei
∘ der erste Abschnitt den inneren, zylindrischen Gewindestopfen (4) ausbildet; und
∘ der zweite Abschnitt, der den folgenden Endabschnitt darstellt, eine geschlossene Seite der zylindrischen, abnehmbaren Kappe (2) ausbildet, die eine Düse (5) aufweist, die an eine Rohrleitung angeschlossen werden kann und einen schmalen, ringförmigen Kanal bereitstellt;
- der dritte Hauptteil die in Längsrichtung deckungsgleiche Magnetanordnung ist, die einen linearen, zylindrischen Magnetkörper (33) ausbildet, der aus den folgenden Anordnungen besteht:
∘ Magneten (31), die axial magnetisiert sind, und
∘ schmalen Ringabstandhaltern (32)
und eine koaxiale, ringförmige Magnetisierungskammer ausbildet;
**dadurch gekennzeichnet, dass**
- der erste Hauptteil einen dritten Abschnitt mit unterschiedlicher Größe umfasst, der das innere, zylindrische, offene Gewindebett für die abnehmbare, messinggefüllte Gewindekappe (2) ausbildet, wobei der dritte Abschnitt mit unterschiedlicher Größe ein Endabschnitt des ersten Hauptteils ist;
- der zweite Abschnitt des zweiten Hauptteils zwei O-Ringe (14) umfasst;
- die Magnete (31) dreizehn ringförmige, versenkte Neodym-Rundring-Seltenerdmagnete der Güte N52 sind, wobei jeder Magnet ein Versenkungsloch aufweist, wobei die flache Seite mit dem Versenkungsloch als Südpol definiert ist und die flache Seite gegenüber dem Versenkungsloch als Nordpol definiert ist, wobei jeder Magnet (31) einen Außendurchmesser von 30 mm, einen Innendurchmesser von 5 mm, eine Dicke von 10 mm aufweist und jedes Versenkungsloch einen Durchmesser von maximal 10 mm aufweist;
- die Magnete mit Nickel, bevorzugt Ni-Cu-Ni, beschichtet sind und eine Magnetzugkraft von 165,47 N (37,20 Ib), ein Flächenfeld By, Mitte = -0,9512 T (-9,512 Gauß), ein Feld By, Ring = 0,5084 T (5,084 Gauß), eine Magnetfeldstärke = 0,7103 T (7,103 Gauß), Br max = 1,48 T (14,800 Gauß) aufweisen; und
- die Ringabstandhalter (32) zwölf nichtmagnetische, kreisförmige, schmale Ringabstandhalter sind, wobei der Durchmesser der kreisförmigen Öffnung in der Mitte jedes Ringabstandhalters größer als der Durchmesser der kreisförmigen Öffnung in der Mitte der Magnete (31) ist, wobei jeder Ringabstandhalter (32) einen Außendurchmesser von 30 mm, einen Innendurchmesser von 12 mm und eine Dicke von 1,5 mm aufweist.

2. Verfahren zur Verwendung der Vorrichtung nach Anspruch 1 zur Behandlung von Flüssigkeits- und Gassubstanzen, die aus Wasserstoff und Kohlenwasserstoff bestehen, als Wasser und insbesondere flüssige und gasförmige Kohlenwasserstoffkraftstoffe, wie Gasolin, Benzin-Ethylalkohol, Dieselkraftstoff, Kerosin, Propan, Erdgas, Öl und Ähnliches, um eine verbesserte Effizienz bei der Behandlung von Behandlung von Flüssigkeits- und Gassubstanzen, die aus Wasserstoff und Kohlenwasserstoff bestehen, als Wasser und insbesondere flüssige und gasförmige Kohlenwasserstoffkraftstoffe, wie Gasolin, Benzin-Ethylalkohol, Dieselkraftstoff, Kerosin, Propan, Erdgas, Öl und Ähnliches zu erreichen, wobei:
- die Düse (6) des ersten Hauptteils als Auslassstutzen (7) für die aus Wasserstoff und Kohlenwasserstoff bestehenden Flüssigkeits- und Gassubstanzen verwendet wird;
- die Düse (5) des zweiten Hauptteils als Einlassstutzen (8) für die aus Wasserstoff und Kohlenwasserstoff bestehenden Flüssigkeits- und Gassubstanzen verwendet wird und einen schmalen, ringförmigen Kanal (4) bereitstellt;
- sich die eingeleiteten aus Wasserstoff und Kohlenwasserstoff bestehenden Flüssigkeits- und Gassubstanzen mit einer wendelförmigen, turbulenten, zentripetalen Bewegung direkt durch die Mittelöffnung des dritten Hauptteils bewegen; und
- der dritte Hauptteil der koaxialen, ringförmigen Magnetisierungskammer ausgebildet wird, was zu einer sehr schnellen, kontinuierlichen Ausrichtungsveränderung der Moleküle führt, was in Kombination mit der Veränderlichkeit des in der ringförmigen Magnetisierungskammer vorhandenen Magnetfelds eine extrem starke und häufige Bewegung der atomaren Teilchen der aus Wasserstoff und Kohlenwasserstoff bestehenden Flüssigkeits- und Gassubstanzen erzeugt, was wiederum sehr präzise, jedoch dadurch axial gleichmäßige und kontinuierlich in Längsrichtung generierte Magnetlinien der Kräfte bereitstellt und somit die Effektivität der sehr hochintensiven, ausreichenden und stark verbesserten Magneteinflüsse als Magnetfluss und molekulare Aufregung aufgrund von aus Wasserstoff und Kohlenwasserstoff bestehen-den Flüssigkeits- und Gassubstanzen maximiert.

## Revendications

1. Dispositif conçu pour exécuter le procédé selon la revendication 2, ledit dispositif comprenant trois parties, dans lequel
la première partie principale est un corps externe rempli de laiton de forme cylindrique non magnétique (1) présentant une longueur extérieure de 183 mm et un diamètre extérieur de 42 mm et étant formé de deux sections de différentes tailles, dans lequel
la première section forme un côté totalement fermé du corps cylindrique non magnétique (1) et possède une buse (6) pouvant être raccordée à une conduite ; et
la deuxième section forme un lit ouvert cylindrique interne pour un ensemble aimanté cylindrique central coextensif longitudinalement formant un corps d'aimant linéaire ;
la deuxième partie principale forme un capuchon rempli de laiton fileté cylindrique démontable (2) formé de deux sections de tailles différentes, dans lequel
la première section forme le bouchon fileté cylindrique interne (4) ; et
la seconde section, qui est la section d'extrémité suivante, forme un côté fermé du capuchon cylindrique démontable (2) ayant une buse (5) pouvant être raccordée à une conduite et fournissant une voie de passage annulaire étroite ;
la troisième partie principale est l'ensemble aimanté coextensif longitudinalement formant un corps d'aimant cylindrique linéaire (33) constitué par l'assemblage :
d'aimants (31) qui sont magnétisés axialement, et
d'entretoises de bagues minces (32),
et formant une chambre de magnétisation annulaire coaxiale ;
**caractérisé en ce que** :
la première partie principale comprend une troisième section de taille différente qui forme le lit fileté ouvert cylindrique interne pour le capuchon rempli de laiton fileté démontable (2), dans lequel la troisième section de taille différente est une section d'extrémité de la première partie principale ;
la seconde section de la deuxième partie principale comprend deux joints toriques (14) ;
les aimants (31) sont treize aimants des terres rares fraisurés à rondelle en néodyme résistant de qualité N52, chaque aimant comportant un trou fraisuré, dans lequel la surface plate qui comporte le trou fraisuré est définie comme Pôle Sud et la surface plate opposée au trou fraisuré est définie comme Pôle Nord, chaque aimant (31) présentant un diamètre extérieur de 30 mm, un diamètre intérieur de 5 mm, une épaisseur de 10 mm et chaque trou fraisuré présentant un diamètre de 10 mm au maximum ;
les aimants étant revêtus de nickel, de préférence de Ni-Cu-Ni, ayant une force de traction magnétique de 165,47 N (37,20 Ib), un champ de surface au centre = -0,9512 T (-9512 gauss), un champ de surface au niveau de la bague = 0,5084 T (5084 gauss), une intensité du champ magnétique = 0,7103 T (7103 gauss), un Br max = 1,48 T (14800 gauss) ; et
les entretoises de bagues minces (32) sont douze entretoises de bagues minces circulaires en PVC non magnétiques, dans lequel le diamètre de l'ouverture circulaire au centre de chaque entretoise de bague mince est supérieur au diamètre de l'ouverture circulaire au centre des aimants (31), chaque entretoise de bague mince (32) présentant un diamètre extérieur de 30 mm, un diamètre intérieur de 12 mm et une épaisseur de 1,5 mm.

2. Procédé d'utilisation du dispositif selon la revendication 1 destiné à traiter l'hydrogène et des hydrocarbures constitués de substances liquides et gazeuses telles que l'eau et plus particulièrement des combustibles hydrocarbures liquides et gazeux, tels que l'essence, l'essence-alcool, le carburant diesel, le kérosène, le propane, le gaz naturel, le pétrole et similaires, afin d'obtenir une meilleure efficacité du traitement de l'hydrogène et des hydrocarbures constitués de substances liquides et gazeuses telles que l'eau et plus particulièrement des combustibles hydrocarbures liquides et gazeux, tels que l'essence, l'essence-alcool, le carburant diesel, le kérosène, le propane, le gaz naturel, le pétrole et similaires, dans lequel :
la buse (6) de la première partie principale est utilisée comme port de sortie (7) pour l'hydrogène et les hydrocarbures constitués de substances liquides et gazeuses ;
la buse (5) de la deuxième partie principale est utilisée comme port d'entrée (8) pour l'hydrogène et les hydrocarbures constitués de substances liquides et gazeuses et fournit une voie de passage annulaire étroite (4) ;
l'hydrogène et les hydrocarbures constitués de substances liquides et gazeuses introduits se déplacent suivant un mouvement centripète à tourbillon hélicoïdal directement à travers l'ouverture centrale de la troisième partie principale ; et
dans la troisième partie principale est formée la chambre de magnétisation annulaire coaxiale, ce qui entraîne une variation continue très rapide de l'orientation des molécules, ce qui, en combinaison avec la capacité de changement du champ magnétique présent dans la chambre de magnétisation annulaire, crée un déplacement extrêmement violent et fréquent des particules atomiques de l'hydrogène et des hydrocarbures constitués de substances liquides et gazeuses, produisant ainsi des lignes de force magnétiques générées très concentrées mais axialement uniformément et continûment longitudinales et maximise ainsi l'efficacité des impacts magnétiques très intenses, suffisants et fortement améliorés en tant que flux magnétique et excitation moléculaire sur l'hydrogène et les hydrocarbures constitués de substances liquides et gazeuses.
